# EUROPEAN PATENT SPECIFICATION

(11) **EP 3 425 564 B1**
(45) Date of publication and mention of the grant of the patent: **07.07.2021**
(21) Application number: 18170019.6
(22) Date of filing: 30.04.2018
(51) Int. Cl.: G06K 9/20, G06K 9/00, H04N 5/235, G02B 27/00, G02B 19/00, H04N 5/225, H04N 5/33, F21V 14/00, F21V 14/02

(54) **INFRARED LIGHT SOURCE COMPONENT AND ELECTRONIC DEVICE**
INFRAROTLICHTQUELLENKOMPONENTE UND ELEKTRONISCHE VORRICHTUNG
COMPOSANT DE SOURCE DE LUMIÈRE INFRAROUGE ET DISPOSITIF ÉLECTRONIQUE

(30) Priority: 07.07.2017 CN 201710553059
(43) Date of publication of application: 09.01.2019
(73) Proprietor: GUANGDONG OPPO MOBILE TELECOMMUNICATIONS CORP., LTD., Wusha, Chang'an Dongguan, Guangdong 523860 (CN)
(72) Inventor: ZHOU, Yibao, Dongguan, Guangdong 523860 (CN)
(74) Representative: Manitz Finsterwald Patent- und Rechtsanwaltspartnerschaft mbB

(56) References cited:
- CN-A- 106 022 299
- US-A- 4 475 179
- US-A1- 2008 019 702
- US-A1- 2008 088 954
- US-A1- 2017 050 555
- US-A1- 2017 061 210

## Description

### TECHNICAL FIELD

The disclosure relates to the technical field of biological feature recognition, and more particularly to an infrared light source component and an electronic device. The features of the preamble of the independent claim are known from CN 106 022 299 A, US 2017/050555 A1 and US 2017/061210 A1.

### BACKGROUND

Iris recognition usually requires an infrared light source for supplementing light to assist in acquisition of a clear image of the iris. An illumination range of an existing infrared light source covers the whole field of view of an infrared camera, and thus has high power consumption, low illumination intensity per unit area, and poor light supplementing effect.

### SUMMARY

The present invention is set out as defined in the appended claims. Any embodiment in the present disclosure that does not fall within the scope of protection of the present invention shall be regarded as an example for understanding the present invention but not belonging to the present invention. Embodiments of the disclosure provide an infrared light source component and an electronic device.

### BRIEF DESCRIPTION OF DRAWINGS

In order to make abovementioned or/and additional aspects and advantages of the disclosure more clear, the embodiments of the disclosure will be further elaborated below in combination with the accompanying drawings and embodiments, wherein modifications of the drawings and graphic descriptions in the description are added.
FIG. 1 illustrates a structural schematic diagram of an infrared light source component according to embodiments of the disclosure.
FIG. 2 illustrates a sectional view of an electronic device according to embodiments of the disclosure.
FIG. 3 illustrates a plan view of an electronic device according to embodiments of the disclosure.
FIGS. 4-11 illustrate sectional views of an electronic device according to embodiments of the disclosure.

### DETAILED DESCRIPTION

The embodiments of the disclosure will be described below in detail, and examples of the embodiments are shown in the drawings, wherein the same or similar reference signs always represent the same or similar components or components with the same or similar functions. The embodiments described with reference to the drawings below are exemplary, are only adopted to explain the disclosure and may not be understood as limits to the disclosure.

In the description of the disclosure, it is to be understood that orientation or position relationships indicated by terms "center", "longitudinal", "transverse", "length", "width", "thickness", "upper", "lower", "front", "rear", "left", "right", "vertical", "horizontal", "top", "bottom", "inner", "outer", "clockwise", "counterclockwise" are orientation or position relationships shown on the basis of the drawings, and it is not intended to indicate or imply that related devices or components are required to be at specific orientations and structured and operated at the specific orientations, but only intended to facilitate and simplify the description of the disclosure, and thus may not be understood as limits to the disclosure. In addition, terms "first" and "second" are only adopted for the objective of description, and may not be understood to indicate or imply relative importance of indicated technical features or implicitly indicate a number of indicated technical features. Therefore, features limited by "first" and "second" may explicitly or implicitly include one or more such features. In the description of the disclosure, unless otherwise explicitly and specifically limited, "multiple" means two or more than two.

In the description of the disclosure, unless otherwise explicitly specified and limited, it is to be noted that, terms "mount", "mutually connect" and "connect" should be broadly understood, and for example, may refer to fixed connection, and may also refer to detachable connection or integrated connection; they may refer to mechanical connection, or may also refer to electrical connection or mutual communication; and they may refer to direct connection, may also refer to indirect connection through an intermediate, or may refer to communication in two components or an interaction relationship of the two components. For those of ordinary skilled in the art, specific meanings of these terms in the disclosure may be understood according to actual conditions.

In the disclosure, unless otherwise explicitly specified and limited, term "over" or "under" used to represents a relation between a first feature and a second feature may include that the first and second features directly contact, and may also include that the first and second features do not directly contact but contact through another feature therebetween. Moreover, the expression "first feature is 'over', 'above' and 'on an upper side of' the second feature" includes that the first feature is over and obliquely above the second feature, or only represents that a horizontal height of the first feature is larger than the second feature. The expression "first feature is 'under', 'below' and 'on a lower side of' the second feature" includes that the first feature is under and obliquely below the second feature, or only represents that the horizontal height of the first feature is smaller than the second feature.

The disclosure described below provides many different embodiments or examples to implement different structures of the disclosure. For simplifying the disclosure of the disclosure, parts and settings of specific examples will be described below. Of course, they are merely examples and not intended to limit the disclosure. In addition, reference numbers or/and reference letters may be repeated in different examples of the disclosure, and such repetitions are made for the objectives of simplification and clarification, and do not indicate relationships between various embodiments or/and settings which are discussed. Moreover, the disclosure provides examples of various specific processes and materials, but those of ordinary skilled in the art may realize application of other processes or/and use of other materials.

Embodiments of the disclosure provide an infrared light source component and an electronic device.

An infrared light source component of the embodiments of the disclosure may include at least one infrared light source configured to emit infrared light, at least one lens arranged on a light path of the infrared light source and a driving component configured to drive a motion of at least one of the infrared light source or the lens, to enable the lens to guide the infrared light in a target direction.

In at least one embodiment, the infrared light has a divergence angle no more than 5 degrees.

In at least one embodiment, the driving component may include a lens driving member, and the lens driving member may be configured to drive the lens into rotation or to shift, to enable the lens to guide the infrared light in the target direction.

In at least one embodiment, the driving component may include a light source driving member, and the light source driving member may be configured to drive the infrared light source into rotation or to shift, to enable the lens to guide the infrared light in the target direction.

In at least one embodiment, the driving component may include a lens driving member and a light source driving member, the lens driving member may drive the lens into rotation or to shift while the light source driving member drive the infrared light source into rotation or to shift, to regulate an emergent direction of the infrared light by both the lens driving member and the light source driving member and enable the lens to guide the infrared light in the target direction.

In at least one embodiment, the lens driving member may include a lens driving stator and a lens driving mover extending from the lens driving stator; when the lens driving member drives the lens into rotation, the lens driving mover may rotate to drive the lens into rotation; and when the lens driving member drives the motion of the lens, the lens driving mover may shift to drive the lens to shift.

In at least one embodiment, the light source driving member may include a light source driving stator and a light source driving mover extending from the light source driving stator; when the light source driving member drives the infrared light source into rotation, the light source driving mover may rotate to drive the infrared light source into rotation; and when the light source driving member drives the infrared light source to shift, the light source driving mover may shift to drive the infrared light source to shift.

In at least one example, each of the infrared light source and the lens is fixed on a body of the infrared light source component, the driving component drives motions of the infrared light source and the lens simultaneously by driving a motion of the body.

In at least one embodiment, the infrared light source component comprises a plurality of the infrared light source and a plurality of the lens, and each of the lenses covers a respective one of the infrared light sources.

An electronic device of the embodiments of the disclosure may include a casing, an infrared camera, and the infrared light source component mentioned in any abovementioned embodiment, wherein the infrared camera and the infrared light source component may be arranged on the casing and spaced apart from one another, and infrared light emitted by the infrared light source component may be configured to assist the infrared camera in iris recognition.

In at least one embodiment, the electronic device may further include a processor, the infrared camera may be configured to acquire a face image of an object to be recognized, the processor may be configured to process the face image to recognize an image position of a human eye in the face image, determine a spatial position of the human eye in a space according to the image position and a mapping relationship and determine a motion amount for at least one of the infrared light source or a lens according to the spatial position and a distance between the infrared light source component and the infrared camera, the driving component may drive the motion of at least one of the infrared light source or the lens according to the motion amount to regulate an emergent direction of the infrared light and enable the infrared light to cover the eye of the object to be recognized, the mapping relationship may be a relationship between a coordinate system corresponding to the face image and a spatial position coordinate system of the face.

According to the electronic device and infrared light source component of the embodiments of the disclosure, the driving component drives the motion of at least one of the infrared light source or the lens to change the emergent direction of the infrared light emitted by the infrared light source after the infrared light is projected by the lens, thereby enabling the lens to guide the infrared light in the target direction. Therefore, a sufficiently strong infrared light may be projected to the eye of the object to be recognized even when emission power of the infrared light source is relatively low. On one hand, power consumption of the infrared light source can be reduced; and on the other hand, energy of infrared beams of the infrared light source can be relatively concentrated, an illumination intensity can be relatively high, and a relatively good light supplementing effect can be achieved.

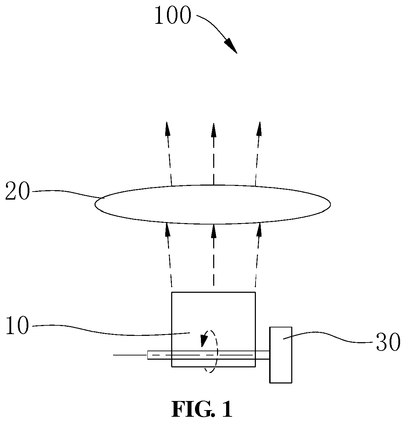

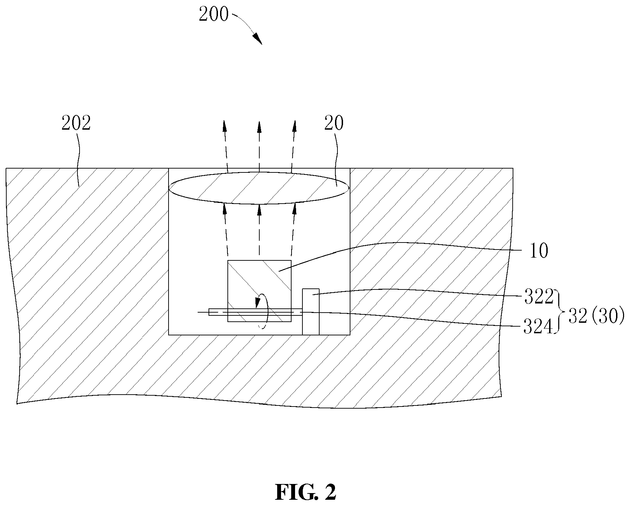

FIG. 1 and FIG. 2 illustrate an infrared light source component 100 of the embodiments of the disclosure including an infrared light source 10, a lens 20 and a driving component 30. The infrared light source 10 is configured to emit infrared light. The lens 20 is arranged on a light path of the infrared light source 10. The driving component 30 is configured to drive the motion of the infrared light source 10, to enable the lens 20 to guide the infrared light in a target direction. Specifically, the lens 20 is arranged on the light path of the infrared light source 10 and covers the light path of the infrared light source 10, that is, all of the infrared light emitted by the infrared light source 10 may be projected onto the lens 20. When the driving component 30 drives the infrared light source 10 to motion, the lens 20 is always positioned on the light path of the infrared light source 10 and covers the light path, and all of the infrared light emitted by the infrared light source 10 may be projected onto the lens 20. Motion of the infrared light source 10 may be rotation or movement (including translation and tilting movement), or includes rotation and movement. Different relative positions of the infrared light source 10 and the lens 20 led to different emergent directions of the infrared light guided by the lens 20, and the driving component 30 may regulate a movement position of the infrared light source 10 according to a position of the target direction (for example, an eye of an object to be recognized), thereby regulating the emergent direction of the infrared light and enabling the lens 20 to guide the infrared light in the target direction.

The target direction may be the eye of the object to be recognized, and when the lens 20 guides the infrared light in the target direction, the infrared light may cover the eye of the object to be recognized.

Of course, the driving component 30 may also be configured to drive the motion of the lens 20, to change the emergent direction of the infrared light emitted by the infrared light source 10 after the infrared light is projected by the lens 20, thereby enabling the lens 20 to guide the infrared light in the target direction. In at least one alternative embodiment, the driving component 30 may also be configured to drive motions of the lens 20 and the infrared light source 10 to change the emergent direction of the infrared light emitted by the infrared light source 10 after the infrared light is projected by the lens 20, thereby enabling the lens 20 to guide the infrared light in the target direction.

It can be understood that irises of most people are relatively dark in color, and when acquiring the iris images, the infrared light source 10 is required to be used for supplementing light to obtain iris images with clear textures. However, many existing infrared light sources 10 adopt area light sources to extend coverage of infrared beams emitted by the infrared light sources 10, which causes relatively high power consumption of the infrared light sources 10 on one hand, and on the other hand, makes it impossible to obtain high-quality iris images due to relatively poor light supplementing effects caused by relatively low illumination intensities and unconcentrated energy of the infrared light sources 10. According to the infrared light source component 100 of the embodiments of the disclosure, the driving component 30 drives the motion of at least one of the infrared light source 10 or the lens 20, to change the emergent direction of the infrared light emitted by the infrared light source 10 after the infrared light is projected by the lens 20, thereby enabling the lens 20 to guide the infrared light in the target direction. Therefore, a sufficiently strong infrared light may be projected to the eye of the object to be recognized even when emission power of the infrared light source 10 is relatively low. On one hand, power consumption of the infrared light source 10 can be reduced; and on the other hand, energy of infrared beams of the infrared light source 10 can be relatively concentrated, the illumination intensity can be relatively high, and a relatively good light supplementing effect can be achieved.

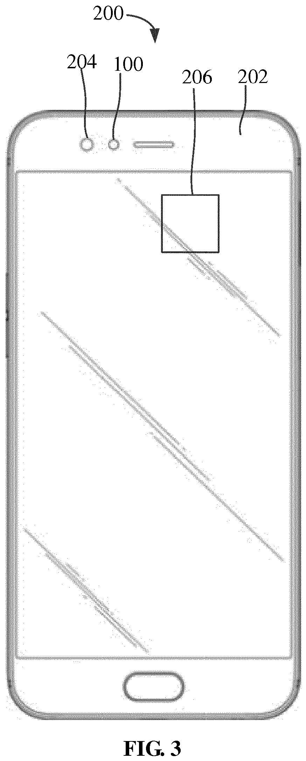

FIG. 3 illustrates an electronic device 200 of the embodiments of the disclosure including a casing 202, an infrared camera 204 and an infrared light source component 100. The electronic device 200 includes a mobile phone, a tablet computer, a notebook computer, a smart watch, a smart band, smart glasses, a helmet or the like. In specific embodiments of the disclosure, the electronic device 200 is a mobile phone.

The infrared camera 204 and the infrared light source component 100 are arranged on the casing 202 and spaced apart from one another, and infrared light emitted by the infrared light source component 100 is configured to assist the infrared camera 205 in iris recognition.

FIG. 2 illustrates the infrared light source component 100 of the embodiments of the disclosure including an infrared light source 10, a lens 20 and a driving component 30.

The infrared light source 10 is movably arranged in the casing 202. The infrared light source 10 is configured to emit the infrared light. Generally, a divergence angle of the infrared light emitted by the infrared light source 10 is no more than 5 degrees. For example, the divergence angle of the infrared light may be any one of 2 degrees, 3.5 degrees, 4 degrees, 4.5 degrees and 5 degrees. The infrared light source 10 may be an infrared Light Emitting Diode, LED.

The lens 20 may be arranged on the casing 202 and covers the infrared light source 10, and the lens 20 and the infrared light source 10 are spaced apart from one another, and may move relative to each other. The lens 20 is configured to guide the infrared light transmitted onto the lens 20 to outside of the infrared light source component 100. Specifically, the lens 20 is configured to guide the infrared light transmitted onto the lens 20 to an eye of an object to be recognized which is outside the casing 202. The lens 20 may be a convex lens, a concave lens, a combination of multiple convex lenses, a combination of multiple concave lenses and a combination of a convex lens and a concave lens, or is another optical lens (for example, a reflector and a prism) except a glass panel.

The driving component 30 includes a light source driving member 32, and the light source driving member 32 includes a light source driving stator 322 and a light source driving stator 324 extending from the light source driving stator 322. Specifically, the light source driving member 32 may be a rotating motor, the light source driving stator 322 may be a stator of the rotating motor, and the light source driving mover 324 may be a rotating shaft of the rotating motor. When the light source driving member 32 is activated and the light source driving mover 324 rotates, the infrared light source 10 is driven into rotation by the rotation of the light source driving mover 324 to change relative positions of the infrared light source 10 and the lens 20, thereby regulating an emergent direction of the infrared light emitted by the infrared light source 10 and enabling the infrared light emitted by the lens 20 to cover an eye of an object to be recognized.

Specifically, when the light source driving member 32 drives the infrared light source 10 to rotate, the lens 20 keeps covering the infrared light source 10, the infrared light emitted by the infrared light source 10 may all be projected to the lens 20, and moreover, the lens 20 may guide the infrared light transmitted onto the lens 20 to the object to be recognized and increases an illumination intensity of a unit area of the infrared light covering the eye of the object to be recognized.

According to the electronic device 200 and infrared light source component 100 of the embodiments of the disclosure, the driving component 30 drives the motion of the infrared light source 10, to change the emergent direction of the infrared light emitted by the infrared light source 10 after the infrared light is projected by the lens 20, thereby enabling the lens 20 to guide the infrared light in a target direction. Therefore, a sufficiently strong infrared light may be projected to the eye of the object to be recognized even when emission power of the infrared light source 10 is relatively low. On one hand, power consumption of the infrared light source 10 can be reduced; and on the other hand, energy of infrared beams of the infrared light source 10 can be relatively concentrated, the illumination intensity can be relatively high, and a relatively good light supplementing effect can be achieved.

The electronic device 200 and infrared light source component 100 of the embodiments of the disclosure also have the following beneficial effect: the divergence angle of the infrared light emitted by the infrared light source 10 is no more than 5 degrees, so that energy of the infrared light can be relatively concentrated, and the intensity of the infrared light irradiating the eye can be relatively high; and therefore, an iris texture in an iris image of the eye acquired by the electronic device 200 is more clear and obvious.

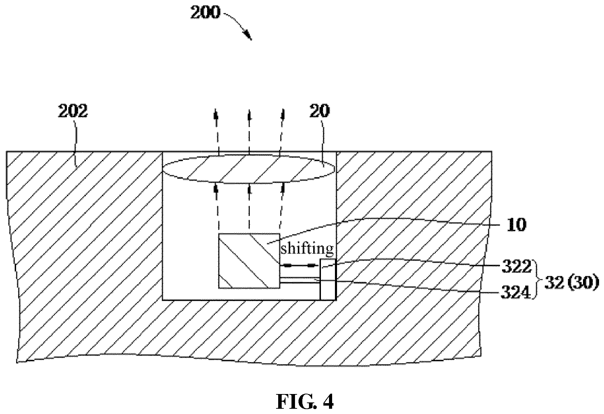

As illustrated in FIG. 4, in at least one embodiment, the light source driving member 32 of the abovementioned embodiments may also be a linear motor, the light source driving stator 322 may be a stator of the linear motor, and the light source driving mover 324 may be a shaft of the linear motor. When the light source driving member 32 is activated and the light source driving mover 324 moves, the infrared light source 10 is driven by movement of the light source driving mover 324 to shift to change the relative positions of the infrared light source 10 and the lens 20, thereby regulating the emergent direction of the infrared light emitted by the infrared light source 10 and enabling the infrared light to cover the eye of the object to be recognized.

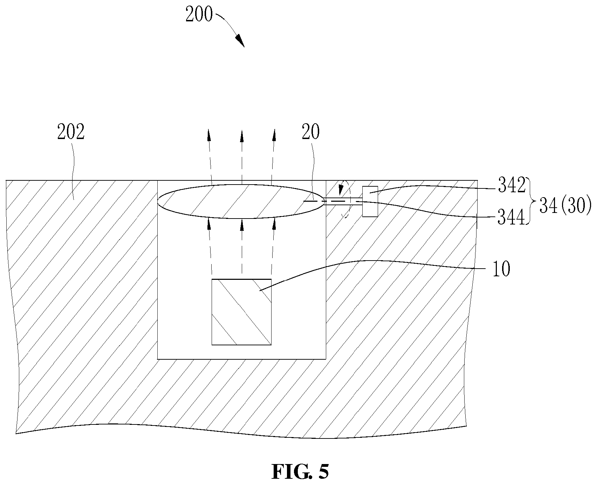

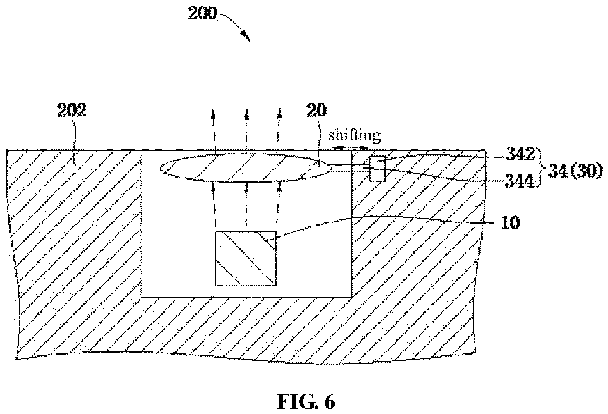

As illustrated in FIG. 5, In at least one embodiment, the light source driving member 32 included in the driving component 30 of the abovementioned embodiments may be replaced with a lens driving member 34, and the lens driving member 34 includes a lens driving stator 342 and a lens driving mover 344 extending from the lens driving stator 342. Specifically, the lens driving member 34 may be a rotating motor, the lens driving stator 342 may be a stator of the rotating motor, and the lens driving mover 344 may be a rotating shaft of the rotating motor. When the lens driving member 34 is activated and the lens driving mover 344 rotates, the lens 20 is driven into rotation by the rotation of the lens driving mover 344 to change the relative positions of the infrared light source 10 and the lens 20, thereby regulating the emergent direction of the infrared light emitted by the infrared light source 10 and enabling the infrared light to cover the eye of the object to be recognized. Of course, as illustrated in FIG. 6, the lens driving member 34 may also be a linear motor, the lens driving stator 342 may be a stator of the linear motor, and the lens driving mover 344 may be a shaft of the linear motor. When the lens driving member 34 is activated and the lens driving mover 344 moves, the lens 20 is driven to shift by the movement of the lens driving mover 344 to change the relative positions of the infrared light source 10 and the lens 20, thereby regulating the emergent direction of the infrared light emitted by the infrared light source 10 and enabling the infrared light to cover the eye of the object to be recognized.

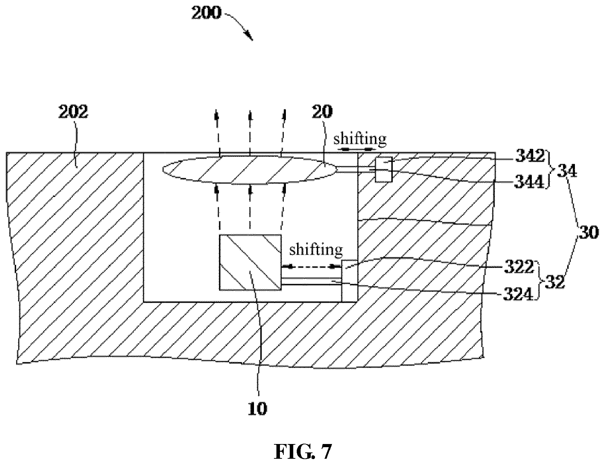

As illustrated in FIG. 7, in at least one embodiment, the driving component 30 of the abovementioned embodiments includes the lens driving member 34 and the light source driving member 32. The lens driving member 34 drives the lens 20 to shift while the light source driving member 32 drives the infrared light source 10 to shift, to regulate the emergent direction of the infrared light and enable the infrared light to cover the eye of the object to be recognized by both the lens driving member and the light source driving member. Specifically, the light source driving member 32 and the lens driving member 34 may both be linear motors, each of the light source driving stator 322 and the lens driving stator 342 may be a stator of the corresponding linear motor, and each of the light source driving mover 324 and the lens driving mover 344 may be a shaft of the corresponding linear motor. When the light source driving member 32 is activated, the light source driving mover 324 moves, the infrared light source 10 is driven to shift by the movement of the light source driving mover 324. In addition, the lens driving member 34 is activated, the lens driving mover 344 moves, and the lens 20 keeps covering the infrared light source 10 when the lens 20 is driven to shift by movement of the lens driving mover 344. All of the infrared light emitted by the infrared light source 10 may be projected to the lens 20, and the lens 20 may guide the infrared light projected to the lens 20 to the object to be recognized, and increases the illumination intensity of the unit area of the infrared light covering the eye of the object to be recognized.

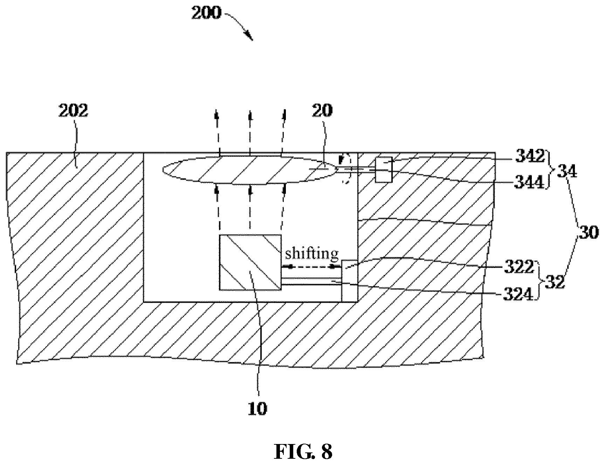

As illustrated in FIG. 8, the driving component 30 of the embodiment may further be constructed as follows: the light source driving member 32 may be a linear motor, the light source driving stator 322 may be a stator of the linear motor, and the light source driving mover 324 may be a shaft of the linear motor; the lens driving member 34 may be a rotating motor, the lens driving stator 342 may be a stator of the rotating motor, and the lens driving mover 344 may be a rotating shaft of the rotating motor. That is, the light source driving member 32 is activated, and the light source driving mover 324 moves to drive the infrared light source 10 to shift; and meanwhile, the lens driving member 34 is activated, and the lens driving mover 344 rotates to drive the lens 20 in to rotation.

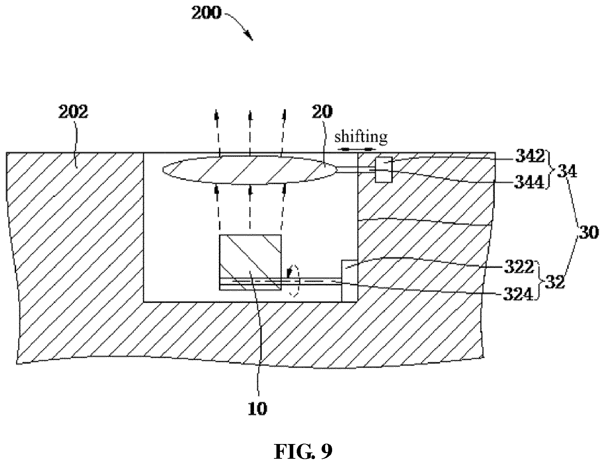

As illustrated in FIG. 9, the driving component 30 of the embodiment may further be constructed as follows: the light source driving member 32 may be a rotating motor, the light source driving stator 322 may be a stator of the rotating motor, and the light source driving mover 324 may be a rotating shaft of the rotating motor; and the lens driving member 34 may be a linear motor, the lens driving stator 342 may be a stator of the linear motor, and the lens driving mover 344 may be a shaft of the linear motor. That is, the light source driving member 32 is activated, and the light source driving mover 324 rotates to drive the infrared light source 10 to rotate; and meanwhile, the lens driving member 34 is activated, and the lens driving mover 344 moves to drive the lens 20 to shift.

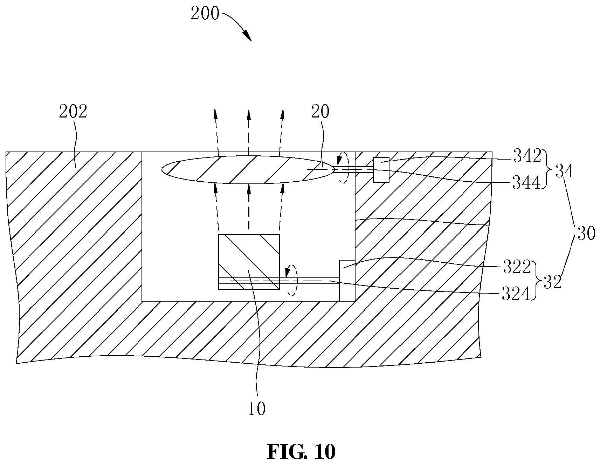

As illustrated in FIG. 10, the driving component 30 of the embodiment may further be constructed as follows: the light source driving member 32 may be a rotating motor, the light source driving stator 322 may be a stator of the rotating motor, and the light source driving mover 324 may be a rotating shaft of the rotating motor; and the lens driving member 34 may be a rotating motor, the lens driving stator 342 may be a stator of the rotating motor, and the lens driving mover 344 may be a rotating shaft of the rotating motor. That is, the light source driving member 32 is activated, and the light source driving mover 324 rotates to drive the infrared light source 10 into rotation; and meanwhile, the lens driving member 34 is activated, and the lens driving mover 344 rotates to drive the lens 20 into rotation.

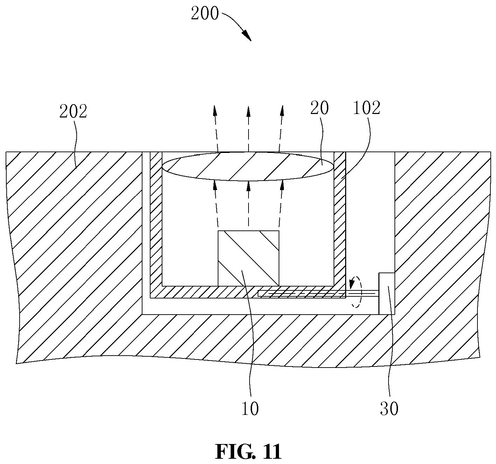

As illustrated in FIG. 11, in at least one example, the infrared light source 10 and lens of the abovementioned embodiments are relatively stationary, that is, the infrared light source 10 and the lens 20 are both fixed on a body 102 of the infrared light source component 100. When the driving component 30 drives the motion of the body 102, namely the driving component 30 drives the motions of the infrared light source 10 and the lens simultaneously, the emergent direction of the infrared light emitted by the infrared light source 10 after the infrared light is projected by the lens 20 is changed, so that the infrared light may cover the eye of the object to be recognized.

As illustrated in FIG. 3, in at least one embodiment, the electronic device 200 of the abovementioned embodiments further includes a processor 206. The infrared camera 204 is configured to acquire a face image of the object to be recognized. The processor 206 is configured to process the face image to recognize an image position of the human eye in the face image, determine a spatial position of the human eye in a space according to the image position and a mapping relationship, and determine a motion amount for at least one of the infrared light source 10 or the lens 20 according to the spatial position and a distance between the infrared light source component 100 and the infrared camera 204. The driving component 30 drives the motion of at least one of the infrared light source 10 or the lens 20 according to the motion amount to enable the lens 20 to guide the infrared light in the target direction, The mapping relationship may be a relationship between a coordinate system corresponding to the face image and a spatial position coordinate system of the face.

Specifically, after the face image is acquired by the infrared camera 204, the processor 206 processes the face image to recognize the position of the human eye. There are many recognition methods for recognizing the position of the human eye, for example, a template-matching-based method and a grayscale-projection-based method. In these methods, the template-matching-based method is to translate a reference template image point by point in a search region of the face image, traverse each position point in the search region, calculate, in the meantime, a related value of an image region of the position point in the search region and a reference template according to a certain similarity measurement principle, and then determine whether the position point is a position point where the human eye is positioned according to a magnitude of the related value. The grayscale-projection-based method is to project a grayscale image of the face by horizontal and vertical methods, make statistics on grayscale values in horizontal and vertical directions and functions thereof respectively, and find each change point and corresponding positions of the face and the human eye based on prior knowledge about the face and a geometric distribution of the human eye. A plane coordinate system X-Y is established on a field of view of the infrared camera 204, and another plane coordinate system X'-Y' having a certain mapping relationship with the plane coordinate system X-Y is established on the face image captured by the infrared camera 204. In the plane coordinate system X'-Y', each pixel in the face image has a coordinate value, and thus may be mapped to the plane coordinate system X-Y to determine a corresponding position of each pixel in the field of view. Since the human eye may correspond to multiple pixels, when the position of the human eye on the face image is recognized, one pixel of multiple pixels may be selected as a pixel point of the position of the human eye. Then, a coordinate (x', y') of the pixel is determined in the plane coordinate system X'-Y', and a coordinate (x, y) of the pixel in the plane coordinate system X-Y is determined according to the mapping relationship between the plane coordinate system X-Y and the plane coordinate system X'-Y'. The driving component 30 drives the motion of at least one of the infrared light source 10 or the lens 20 to change the emergent direction of the infrared light emitted by the infrared light source 10 after the infrared light is projected by the lens 20, thereby regulating the emergent direction of the infrared light. The position of the infrared light source 10 relative to the lens 20 also has a certain mapping relationship with each coordinate point in the plane coordinate system X-Y, and the mapping relationship is empirical data obtained by a number of experimental tests made early. Therefore, after the coordinate (x, y) of the pixel in the plane coordinate system X-Y is determined, the motion amount for at least one of the infrared light source 10 or the lens 20 may be determined according to a mapping relationship between the position of the infrared light source 10 relative to the lens 20 and the coordinate point. The driving component 30 drives the motion of at least one of the infrared light source 10 or the lens 20 according to the motion amount to change the emergent direction of the infrared light emitted by the infrared light source 10 after the infrared light is projected by the lens 20, thereby enabling the lens 20 to guide the infrared light in the target direction. The mapping relationship is a relationship between the coordinate system corresponding to the face image and a spatial position coordinate system of the face. Therefore, the electronic device 200 may acquire an iris image with a relatively clear texture.

In the description, the descriptions made with reference to terms "embodiments", "an embodiment", "some embodiments", "schematic embodiments", "examples", "specific examples", "some examples" or the like refer to that specific features, structures, materials or characteristics described in combination with the embodiments or the examples are included in at least one embodiment or example of the disclosure. In the description, schematic expressions about the above terms do not always refer to the same embodiments or examples. Moreover, the specific features, structures, materials or characteristics which are described may be combined in a proper manner in any one or more embodiments or examples.

In addition, terms "first" and "second" are adopted only for purposes of illustration, and may not be understood to indicate or imply relative importance or implicitly indicate the number of the indicated technical features. Therefore, the features limited by "first" and "second" may explicitly or implicitly include one or more such features. In the description, "multiple" means at least two, for example, two and three, unless otherwise explicitly and specifically limited.

## Claims

1. An infrared light source component (100), comprising:
at least one infrared light source (10), the infrared light source (10) being configured to emit infrared light;
a driving component (30),
at least one lens (20), the lens (20) being arranged on a light path of the infrared light source (10), **characterized in that** the driving component (30) comprises a lens driving member (34) comprising a lens driving stator (342) and a lens driving mover (344) extending from the lens driving stator (342), and a light source driving member (32) comprising a light source driving stator (322) and a light source driving mover (324) extending from the light source driving stator (322), the lens driving member being configured to drive the lens (20) to shift along an axis of the lens driving mover (344) and in a direction perpendicular to an emergent direction of the infrared light after the infrared light is projected by the lens, and the light source driving member (32) being configured to drive the infrared light source (10) to shift along an axis of the light source driving mover (324) and in a direction perpendicular to the emergent direction of the infrared light after the infrared light is projected by the lens, for regulating the infrared light in a target direction by the lens (20) after the infrared light is projected by the lens,
wherein when the light source driving member (32) is activated, the light source driving mover (324) moves, the infrared light source (10) is driven to shift by the movement of the light source driving mover (324), the lens driving member (34) is activated, the lens driving mover (344) moves, and the lens (20) keeps covering the infrared light source (10) when the lens (20) is driven to shift by movement of the lens driving mover (344).

2. The infrared light source component according to claim 1, wherein the infrared light has a divergence angle no more than 5 degrees.

3. The infrared light source component according to claim 1, wherein the infrared light source component (100) comprises a plurality of the infrared light source (10) and a plurality of the lens (20), and each of the lenses (20) covers a respective one of the infrared light sources (10).

4. An electronic device (200) comprising:
a casing (202);
an infrared camera (204); and
the infrared light source component (100) according to any one of claims 1-3, wherein the infrared camera (204) and the infrared light source component (100) are arranged on the casing (202) and spaced apart from one another, and infrared light emitted by the infrared light source component (100) is configured to assist the infrared camera (204) in iris recognition.

5. The electronic device according to claim 4, wherein the electronic device (200) further comprising a processor (206), the infrared camera (204) is configured to acquire a face image of an object to be recognized, the processor (206) is configured to process the face image to recognize an image position of a human eye in the face image, determine a spatial position of the human eye in a space according to the image position and a mapping relationship, and determine a motion amount for at least one of the infrared light source (10) and the lens (20) according to the spatial position and a distance between the infrared light source component (100) and the infrared camera (204), the driving component (30) drives the motion of at least one of the infrared light source (10) and the lens (20) according to the motion amount to regulate an emergent direction of the infrared light and enable the infrared light to cover the eye of the object to be recognized, the mapping relationship is a relationship between a coordinate system corresponding to the face image and a spatial position coordinate system of the face.

## Patentansprüche

1. Infrarotlichtquellenkomponente (100), umfassend:
mindestens eine Infrarotlichtquelle (10), wobei die Infrarotlichtquelle (10) konfiguriert ist zum Abstrahlen eines Infrarotlichts;
eine Antriebskomponente (30);
mindestens eine Linse (20), wobei die Linse (20) in einem Lichtweg der Infrarotlichtquelle (10) angeordnet ist;
**dadurch gekennzeichnet, dass**
die Antriebskomponente (30) umfasst: ein Linsenantriebselement (34), das einen Linsenantriebsstator (342) und einen Linsenantriebsbeweger (344) umfasst, der sich von dem Linsenantriebsstator (342) aus erstreckt; und ein Lichtquellenantriebselement (32), das einen Lichtquellenantriebsstator (322) und einen Lichtquellenantriebsbeweger (324) umfasst, der sich von dem Lichtquellenantriebsstator (322) aus erstreckt,
wobei das Linsenantriebselement konfiguriert ist zum Antreiben der Linse (20), um entlang einer Achse des Linsenantriebsbewegers (344) und in einer Richtung senkrecht zu einer Abstrahlrichtung des Infrarotlichts verschoben zu werden, nachdem das Infrarotlicht durch die Linse projiziert wird, und wobei das Lichtquellenantriebselement (32) konfiguriert ist zum Antreiben der Infrarotlichtquelle (10), um entlang einer Achse des Lichtquellenantriebsbewegers (324) und in einer Richtung senkrecht zu einer Abstrahlrichtung des Infrarotlichts verschoben zu werden, nachdem das Infrarotlicht durch die Linse projiziert wird, um das Infrarotlicht in einer Zielrichtung durch die Linse (20) zu regeln, nachdem das Infrarotlicht durch die Linse projiziert wird,
wobei, wenn das Lichtquellenantriebselement (32) aktiviert wird, der Lichtquellenantriebsbeweger (324) bewegt wird, die Infrarotlichtquelle (10) angetrieben wird, um durch die Bewegung des Lichtquellenantriebsbewegers (324) verschoben zu werden, das Linienantriebselement (34) aktiviert wird, der Linsenantriebsbeweger (344) bewegt wird, und die Linse (20) die Infrarotlichtquelle (10) weiterhin abdeckt, wenn die Linse (20) angetrieben wird, um durch die Bewegung des Linsenantriebsbewegers (344) verschoben zu werden.

2. Infrarotlichtquellenkomponente nach Anspruch 1, wobei das Infrarotlicht einen Divergenzwinkel von nicht mehr als 5 Grad aufweist.

3. Infrarotlichtquellenkomponente nach Anspruch 1, wobei die Infrarotlichtquellenkomponente (100) eine Vielzahl der Infrarotlichtquellen (10) und eine Vielzahl der Linsen (20) umfasst, und wobei jede der Linsen (20) eine entsprechende der Infrarotlichtquellen (10) abdeckt.

4. Elektronische Vorrichtung (200), umfassend:
ein Gehäuse (202);
eine Infrarotkamera (204); und
die Infrarotlichtquellenkomponente (100) nach einem der Ansprüche 1 bis 3, wobei die Infrarotkamera (204) und die Infrarotlichtquellenkomponente (100) in dem Gehäuse (202) angeordnet sind und voneinander beabstandet sind, und
wobei ein Infrarotlicht, das von der Infrarotlichtquellenkomponente (100) abgestrahlt wird, konfiguriert ist, um die Infrarotkamera (204) bei einer Iriserkennung zu unterstützen.

5. Elektronische Vorrichtung nach Anspruch 4; wobei die elektronische Vorrichtung (200) außerdem einen Prozessor (206) umfasst, wobei die Infrarotkamera (204) konfiguriert ist zum Erfassen eines Gesichtsbildes einer zu erkennenden Person, wobei der Prozessor (206) konfiguriert ist zum Verarbeiten des Gesichtsbildes, um eine Bildposition eines menschlichen Auges in dem Gesichtsbild zu erkennen; zum Ermitteln einer räumlichen Position des menschlichen Auges in einem Raum gemäß der Bildposition und einer Zuordnungsbeziehung, und zum Ermitteln einer Bewegungsgröße für mindestens eine der Infrarotlichtquelle (10) und der Linse (20) gemäß der räumlichen Position und einem Abstand zwischen der Infrarotlichtquellenkomponente (100) und der Infrarotkamera (204), wobei die Antriebskomponente (30) die Bewegung von mindestens einer der Infrarotlichtquelle (10) und der Linse (20) gemäß der Bewegungsgröße antreibt, um eine Abstrahlrichtung des Infrarotlichts zu regeln und um dem Infrarotlicht zu ermöglichen, das Auge der zu erkennenden Person abzudecken, wobei die Zuordnungsbeziehung eine Beziehung zwischen einem Koordinatensystem, das dem Gesichtsbild entspricht, und einem räumlichen Positionskoordinatensystem des Gesichts ist.

## Revendications

1. Composant à source de lumière infrarouge (100), comprenant :
au moins une source de lumière infrarouge (10), la source de lumière infrarouge (10) étant configurée pour émettre de la lumière infrarouge ;
un composant d'entraînement (30) ;
au moins une lentille (20), la lentille (20) étant disposée sur un trajet lumineux de la source de lumière infrarouge (10),
**caractérisé en ce que**
le composant d'entraînement (30) comprend un élément d'entraînement de lentille (34) comprenant un stator d'entraînement de lentille (342) et un dispositif mobile d'entraînement de lentille (344) s'étendant depuis le stator d'entraînement de lentille (342), et un élément d'entraînement de source de lumière (32) comprenant un stator d'entraînement de source de lumière (322) et un dispositif mobile d'entraînement de source de lumière (324) s'étendant depuis le stator d'entraînement de source de lumière (322), l'élément d'entraînement de lentille étant configuré pour entraîner la lentille (20) pour qu'elle se déplace le long d'un axe du dispositif mobile d'entraînement de lentille (344) et dans une direction perpendiculaire à une direction émergente de la lumière infrarouge après que la lumière infrarouge a été projetée par la lentille, et l'élément d'entraînement de source de lumière (32) étant configuré pour entraîner la source de lumière infrarouge (10) pour qu'elle se déplace le long d'un axe du dispositif mobile d'entraînement de source de lumière (324) et dans une direction perpendiculaire à la direction émergente de la lumière infrarouge après que la lumière infrarouge a été projetée par la lentille, en vue de la régulation de la lumière infrarouge dans une direction cible par la lentille (20) après que la lumière infrarouge a été projetée par la lentille,
dans lequel, quand l'élément d'entraînement de source de lumière (32) est activé, le dispositif mobile d'entraînement de source de lumière (324) se met en mouvement, la source de lumière infrarouge (10) est entraînée pour se déplacer par le mouvement du dispositif mobile d'entraînement de source de lumière (324), l'élément d'entraînement de lentille (34) est activé, le dispositif mobile d'entraînement de lentille (344) se met en mouvement, et la lentille (20) continue à couvrir la source de lumière infrarouge (10) quand la lentille (20) est entraînée pour se déplacer par le mouvement du dispositif mobile d'entraînement de lentille (344).

2. Composant à source de lumière infrarouge selon la revendication 1, dans lequel la lumière infrarouge a un angle de divergence ne dépassant pas 5 degrés.

3. Composant à source de lumière infrarouge selon la revendication 1, le composant à source de lumière infrarouge (100) comprenant une pluralité de sources de lumière infrarouge (10) et une pluralité de lentilles (20), et chacune des lentilles (20) couvre l'une respective des sources de lumière infrarouge (10).

4. Dispositif électronique (200) comprenant :
un boîtier (202) ;
une caméra infrarouge (204) ; et
le composant à source de lumière infrarouge (100) selon l'une quelconque des revendications 1 à 3, la caméra infrarouge (204) et le composant à source de lumière infrarouge (100) étant disposés sur le boîtier (202) et espacés l'un de l'autre, et la lumière infrarouge émise par le composant à source de lumière infrarouge (100) est configurée pour aider la caméra infrarouge (204) dans une reconnaissance d'iris.

5. Dispositif électronique selon la revendication 4, le dispositif électronique (200) comprenant en outre un processeur (206), la caméra infrarouge (204) étant configurée pour acquérir une image de visage d'un sujet à reconnaître, le processeur (206) étant configuré pour traiter l'image de visage pour reconnaître une position dans l'image d'un œil humain dans l'image de visage, déterminer une position spatiale de l'œil humain dans un espace en fonction de la position dans l'image et d'une relation de correspondance, et déterminer une quantité de mouvement pour la source de lumière infrarouge (10) et/ou la lentille (20) en fonction de la position spatiale et d'une distance entre le composant à source de lumière infrarouge (100) et la caméra infrarouge (204), le composant d'entraînement (30) entraînant le mouvement de la source de lumière infrarouge (10) et/ou de la lentille (20) en fonction de la quantité de mouvement pour réguler une direction émergente de la lumière infrarouge et permettre à la lumière infrarouge de couvrir l'œil du sujet à reconnaître, la relation de correspondance étant une relation entre un système de coordonnées correspondant à l'image de visage et un système de coordonnées de position spatiale du visage.
